# EUROPÄISCHE PATENTSCHRIFT

(11) **EP 3 789 174 B1**
(45) Veröffentlichungstag und Bekanntmachung des Hinweises auf die Patenterteilung: **04.09.2024**
(21) Anmeldenummer: 19195632.5
(22) Anmeldetag: 05.09.2019
(51) Int. Cl.: B29C 43/02, B29C 43/52, B60R 13/02, B29C 43/14, B29C 43/36

(54) **INNENVERKLEIDUNGSBAUTEIL MIT EINER DREIDIMENSIONALEN FORM FÜR EIN KRAFTFAHRZEUG SOWIE VORRICHTUNG UND VERFAHREN ZUM HERSTELLEN EINES DERARTIGEN INNENVERKLEIDUNGSBAUTEILS**
INTERNAL TRIM COMPONENT WITH A THREE-DIMENSIONAL SHAPE FOR A MOTOR VEHICLE AND DEVICE AND METHOD FOR PRODUCING SAID TYPE OF INTERNAL TRIM COMPONENT
COMPOSANT DE REVÊTEMENT INTÉRIEUR DE FORME TRIDIMENSIONNELLE POUR UN VÉHICULE AUTOMOBILE AINSI QUE DISPOSITIF ET PROCÉDÉ DE FABRICATION D'UN TEL COMPOSANT DE REVÊTEMENT INTÉRIEUR

(43) Veröffentlichungstag der Anmeldung: 10.03.2021
(73) Patentinhaber: Motherson Innovations Company Limited, London EC2N 2AX (GB)
(72) Erfinder: Pignard, Pierre, 68320 Jebsheim (FR)
(74) Vertreter: Westphal, Mussgnug & Partner Patentanwälte mbB

(56) Entgegenhaltungen:
- EP-A1- 2 926 966
- WO-A1-2015/022086
- WO-A1-2017/053313
- CH-B1- 698 249
- FR-A1- 2 924 972
- US-A- 4 035 215
- US-A1- 2003 124 940
- US-A1- 2003 224 145
- US-A1- 2003 227 107
- US-A1- 2006 105 661
- US-A1- 2010 032 870
- US-A1- 2010 219 561
- US-A1- 2013 052 412
- US-A1- 2015 115 643
- US-A1- 2017 080 617
- US-A1- 2017 182 729
- US-A1- 2018 079 372

## Beschreibung

Die vorliegende Erfindung betrifft ein Innenverkleidungsbauteil mit einer dreidimensionalen Form zur Verwendung in einem Kraftfahrzeug. Darüber hinaus betrifft die Erfindung eine Vorrichtung und ein Verfahren zum Herstellen eines derartigen Innenverkleidungsbauteils.

Neben der reinen Funktion von Kraftfahrzeugen nimmt ihr Design einen immer wichtigeren Stellenwert bei der Kaufentscheidung ein. Dabei erstreckt sich das Design eines Kraftfahrzeugs nicht nur auf die äußere Erscheinung, auch die Gestaltung des Innenraums spielt eine immer wichtiger werdende Rolle. Innenverkleidungsbauteile nehmen bei der Gestaltung des Innenraums eine zentrale Rolle ein. Neben der Hauptaufgabe, den Innenraum eine ansprechende Erscheinung zu verleihen, wird der haptische Eindruck, welchen ein Fahrzeuginsasse beim Berühren des Innenverkleidungsbauteils erfährt, immer wichtiger. Innenverkleidungsbauteile, die an den Fahrzeugtüren befestigt sind, werden auch als Türseitenverkleidung bezeichnet und stellen in der Umgebung des Türzuziehgriffs häufig eine Armauflagefläche bereit, auf welcher der Fahrzeuginsasse seinen Unterarm ablegen kann. Hierbei ist es wünschenswert, wenn die Armauflagefläche vergleichsweise weich und rau ausgeführt ist, um eine gewisse Polsterung bereitzustellen und so dem Fahrzeuginsassen die Ablage seines Unterarms insbesondere aus haptischer Sicht so angenehm wie möglich zu machen. In anderen Abschnitten des Innenverkleidungsbauteils kann es aber wünschenswert sein, diesen eher hart und glatt auszuführen, beispielsweise, um technische Flächen mit klar definierten Eigenschaften bereitzustellen. Beispielsweise kann es notwendig sein, die technischen Flächen mit einer ausreichenden Härte und/oder Stabilität auszustatten, um diese Flächen für die Anbindung des Verkleidungsbauteils an benachbart angeordnete Bauteile zu verwenden. Das betreffende Verkleidungsbauteil kann beispielsweise mit dem benachbart angeordneten Bauteil verschweißt oder verschraubt sein. Die technischen Flächen werden auf die verwendete Anbindung hin ausgelegt.

Zum relevanten Stand der Technik wird auf die US 2006/105661 A1, die US 2010/032870 A1, die US 2015/115643 A1, die US 2003/224145 A1, die US 2003/124940 A1, die US 2018/079372 A1, die WO 2017/053313 A1, die WO 2015/022086 A1, die US 2003/227107 A1, die US 2010/219561 A1 und die US 4 035 215 A verwiesen.

Aufgabe einer Ausführungsform der vorliegenden Erfindung ist es, ein Innenverkleidungsbauteil vorzuschlagen, welches Abschnitte mit unterschiedlichen Oberflächenbeschaffenheiten aufweist und dennoch einfach herzustellen ist. Darüber hinaus liegt einer Ausgestaltung und einer Ausbildung der Erfindung die Aufgabe zugrunde, eine Vorrichtung bzw. ein Verfahren zum Herstellen eines derartigen Innenverkleidungsbauteils zu schaffen.

Diese Aufgabe wird mit den in den Ansprüchen 1, 9 und 13 angegebenen Merkmalen gelöst. Vorteilhafte Ausführungsformen sind Gegenstand der Unteransprüche.

Die Erfindung betrifft ein Innenverkleidungsbauteil mit einer dreidimensionalen Form für ein Kraftfahrzeug, wobei das Innenverkleidungsbauteil aus einem einzigen Vliesmaterial hergestellt ist und umfasst:
- eine erste Oberfläche und eine zweite Oberfläche,
- zumindest einen ersten Abschnitt und zumindest einen zweiten Abschnitt, welche jeweils einen Teil der zweiten Oberfläche bilden, wobei
   o die erste Oberfläche und die zweite Oberfläche einander gegenüberliegen und die zweite Oberfläche (18) die Sichtseite des Innenverkleidungsbauteils bildet,
   o der erste Abschnitt eine erste Abschnittshärte und der zweite Abschnitt eine zweite Abschnittshärte aufweisen, und
- die erste Abschnittshärte und die zweite Abschnittshärte unterschiedlich sind.

Das vorschlagsgemäße Innenverkleidungsbauteil zeichnet sich dadurch aus, dass es einerseits aus einem einzigen Vliesmaterial besteht und es andererseits Abschnitte mit unterschiedlichen Oberflächenbeschaffenheiten aufweist. Diese Abschnitte bilden jeweils einen Teil der zweiten Oberfläche, die diejenige Oberfläche ist, welche die Sichtseite des Innenverkleidungsbauteils bildet und welche folglich von der Innenseite des Kraftfahrzeugs wahrnehmbar ist. In diesem Fall äußern sich die unterschiedlichen Oberflächenbeschaffenheiten darin, dass die betreffenden Abschnitte unterschiedliche Härten aufweisen. Derjenige Abschnitt, der weicher ausgeführt ist als der andere Abschnitt, kann beispielsweise als Armauflagefläche dienen. Mit dem vorschlagsgemäßen Innenverkleidungsbauteil ist es daher nicht notwendig, für die Armauflagefläche ein separates Bauteil zu fertigen und später mit dem übrigen Innenverkleidungsbauteil zu verbinden, weshalb die Fertigung und die Montage des vorschlagsgemäßen Innenverkleidungsbauteil im Vergleich zu bekannten Innenverkleidungsbauteilen deutlich vereinfacht und beschleunigt werden. Selbstverständlich kann das Innenverkleidungsbauteil auch mehr als zwei Abschnitte mit unterschiedlichen Oberflächenbeschaffenheiten aufweisen.

Die hier relevanten Abschnittshärten lassen sich wie folgt näher definieren: Wird eine Stahlkugel mit einem Durchmesser von 30 mm mit einer Druckkraft von 50N (mit 0,2N Vorlast) und einer Geschwindigkeit von 100mm/min, auf die zu prüfenden Abschnitte gedrückt, ergeben sich folgende Eindrucktiefen:

| Charakterisierung | Eindrucktiefe |
|---|---|
| Hart oder hart/flauschig | 0,2 bis 0,6 mm |
| Weich oder weich/flauschig | 1,3 bis 5 mm oder mehr |
| Zwischenbereich: | 0,6 bis 1,3 mm |

Unter einem Innenverkleidungsbauteil mit einer dreidimensionalen Form soll verstanden werden, dass das Innenverkleidungsbauteil gewölbte Abschnitte und/oder ebene Abschnitte aufweist, wobei die ebenen Abschnitte unterschiedliche Wandstärken aufweisen. Auch die gewölbten Abschnitte können unterschiedliche Wandstärken aufweisen.

Erfindungsgemäß weist das Innenverkleidungsbauteil zumindest einen einzigen Bereich auf, der die erste Oberfläche bildet, wobei die erste Abschnittshärte größer als die zweite Abschnittshärte und der Bereich eine gleichbleibende Bereichshärte aufweist, die gleich der ersten Abschnittshärte ist.

Der Bereich mit der Bereichshärte bildet die erste Oberfläche, also die Oberfläche, welche der Sichtseite gegenüber liegt. Dieser Bereich wird gemäß dieser Ausführungsform mit derselben Härte ausgeführt wie die höhere oder höchste Abschnittshärte auf der Sichtseite, kann aber auch eine andere Härte aufweisen. Das Innenverkleidungsbauteil wird daher auf der Seite, die der Sichtseite gegenüber liegt, mit der höheren oder höchsten Härte versehen. Die höhere oder höchste Härte auf der Seite, die der Sichtseite gegenüberliegt, verleiht dem Innenverkleidungsbauteil dort eine Art Trägerfunktion. Hierdurch wird das Innenverkleidungsbauteil vor Verformungen geschützt, so dass der Einbau in das Kraftfahrzeug nicht durch unerwünschte Verformungen, die beispielsweise beim Transport oder bei der Lagerung des Innenverkleidungsbauteils auftreten können, erschwert oder gar unmöglich wird. Zudem lassen sich dadurch, dass die höhere oder höchste Härte auf der Seite, die der Sichtseite gegenüberliegt, vorliegt, technische Funktionen realisieren, insbesondere für die Befestigung des Innenverkleidungsbauteils.

In einer weitergebildeten Ausführungsform kann das Innenverkleidungsbauteil im ersten Abschnitt eine erste Dichte und im zweiten Abschnitt eine zweite Dichte aufweisen, wobei die erste Dichte zwischen 0,6 g/cm³ und 1 g/cm³ und die zweite Dichte zwischen 0,1 g/cm³ und 0,6 g/cm³ betragen. Mit den unterschiedlichen Dichten lassen sich die unterschiedlichen Härten auf vergleichsweise einfache Weise einstellen. Es hat sich herausgestellt, dass sich die gewünschten Härten mit den Dichten in den angegebenen Bereichen erzielen lassen.

Bei einer weitergebildeten Ausführungsform können der erste Abschnitt eine erste Oberflächenrauheit und der zweite Abschnitt eine zweite Oberflächenrauheit aufweisen und die erste Oberflächenrauheit und die zweite Oberflächenrauheit unterschiedlich sein. Für die Haptik ist die Oberflächenrauheit ein wichtiges Maß. Im Rahmen der vorliegenden Beschreibung soll abweichend vom üblichen Gebrauch die Oberflächenrauheit als Maß dafür dienen, wie glatt oder wie flauschig der Fahrzeuginsasse die Oberfläche des betreffenden Abschnitts aus haptischer Sicht wahrnimmt. Bei einer glatten Oberfläche sind keine oder nur sehr wenige herausstehende Vliesfasern an der Oberfläche fühlbar, da alle Vliesfasern oder so gut wie alle Vliesfasern auf einer Ebene zusammen verbunden sind. Bei einer flauschigen Oberfläche sind viele herausstehende Vliesfasern vorhanden, die deutlich fühlbar sind. Die Flauschigkeit ist unter anderem vom Verpressungsgrad, der Temperatur der betreffenden Seite und der Aufheizzeit des Rohlings während der Herstellung und dem Vernadelungsgrad des verwendeten Vliesmaterials abhängig. Der unterschiedliche Verpressungsgrad führt zu unterschiedlichen Florhöhen der betreffenden Abschnitte. Bei flauschigen Oberflächen sind im Gegensatz zu harten Oberflächen dichte, lose, luftige Vliesfasern vorhanden, welche sichtbare Lufteinschlüsse aufweisen.

In dieser Ausführungsform wird daher die Haptik der betreffenden Abschnitte auf der Sichtseite des Innenverkleidungsbauteils nicht nur mit der Härte, sondern auch mit der Oberflächenrauheit gezielt verändert, so dass der sich für den Fahrzeuginsassen ergebende haptische, aber auch der optische Eindruck besonders prägnant und angenehm gestaltet werden kann.

Bei einer weiteren Ausführungsform kann das Vliesmaterial ein vernadeltes Vliesmaterial sein. Es hat sich herausgestellt, dass sich die Herstellung der gewünschten Oberflächenbeschaffenheiten, insbesondere hinsichtlich ihrer Härte und ihrer Oberflächenrauheit, mit vernadeltem Vliesmaterial besonders einfach und kostengünstig gestalten lässt. Alternativ zu einem vernadeltem Vliesmaterial kann ein Wasserstrahl-Vliesmaterial eingesetzt werden.

Eine weitergebildete Ausführungsform zeichnet sich dadurch aus, dass das vernadelte Vliesmaterial Thermoplast-Fasern mit unterschiedlichen Schmelz- und/oder Erweichungstemperaturen umfasst. In dieser Ausführungsform ist es möglich, je nach verwendeten Schmelz- und/oder Erweichungstemperaturen das Innenverkleidungsbauteil mit unterschiedlichen Dichten und folglich mit unterschiedlichen Härten zu versehen. Da sich die beim Herstellen des vorliegenden Innenverkleidungsbauteils verwendeten Schmelz- und/oder Erweichungstemperaturen vergleichsweise einfach einstellen und ändern lassen, kann der Herstellungsprozess einfach gehalten werden. Thermoplast-Fasern haben sich zu diesem Zweck als besonders geeignet herausgestellt. Typische Schmelztemperaturen liegen bei ca. 250°C, während die Erweichungstemperaturen niedriger sind. Je nach Art der verwendeten Fasern können die Erweichungstemperaturen zwischen 60 und 110°C, aber auch bei ca. 200°C liegen. Beim Erreichen der Erweichungstemperatur werden die betreffenden Fasern teilweise geschmolzen, so dass sowohl feste als auch erweichte Bereiche vorliegen.

Nach Maßgabe einer weiteren Ausführungsform bestehen die Thermoplast-Fasern aus Polyester, insbesondere aus Polyethylenterephthalat oder Polybutylenterephthalat. Die Verwendung derartiger Polyester-Fasern hat sich als besonders geeignet herausgestellt.

Eine weitere Ausführungsform zeichnet sich dadurch aus, dass das Vliesmaterial Bikomponentenfasern umfasst. Bei Bikomponentenfasern handelt es sich um ko-extrudierte Fasern mit einem Kern und einer den Kern umschließenden Ummantelung. Dabei kann der Kern aus einem Material mit einer anderen Schmelz- oder Erweichungstemperatur gefertigt sein als die Ummantelung. Mit der Verwendung von Bikomponentenfasern bleibt die dreidimensionale Form des Innenverkleidungsbauteils nach der Verformung und Erstarrung besonders gut erhalten.

Bei einer weiteren Ausführungsform kann der gewichtsbezogene Anteil von den Thermoplast-Fasern zu den Bikomponentenfasern zwischen 70:30 und 30:70 betragen. Es hat sich gezeigt, dass sich eine gute Formtreue dann erreichen lässt, wenn sowohl Thermoplast-Fasern als auch Bikomponentenfasern gemischt werden. Das angegebene gewichtsbezogene Verhältnis hat sich als besonders geeignet erwiesen.

Eine Ausgestaltung der Erfindung betrifft eine Vorrichtung zum Herstellen eines Innenverkleidungsbauteils nach einem der vorherigen Ausführungsformen, umfassend
- ein Kalibrierwerkzeug zum Kalibrieren und Vorformen eines Rohlings, so dass der kalibrierte und vorgeformte Rohling eine dreidimensionale Form aufweist, und
- ein Presswerkzeug zum Formen eines Innenverkleidungsbauteils nach einem der vorherigen Ausführungsformen aus dem kalibrierten und vorgeformten Rohling.

Die technischen Effekte und Vorteile, die sich mit der vorschlagsgemäßen Vorrichtung erreichen lassen, entsprechen denjenigen, die für das vorliegende Innenverkleidungsbauteil erörtert worden sind. Zusammenfassend sei darauf hingewiesen, dass sich mit dieser Vorrichtung das vorliegende Innenverkleidungsbauteil auf einfache und günstige Weise herstellen lässt. An dieser Stelle sei angemerkt, dass das Kalibrierwerkzeug, welches zum Kalibrieren verwendet wird, den Rohling auf seine Verformungstemperatur aufzuheizen und während des Kalibrierens so vorverformt, dass der Rohling nach dem Kalibrieren eine dreidimensionale Form aufweist, welche der endgültigen Form des Innenverkleidungsbauteils in etwa entspricht. Wiederum gilt für die Definition der dreidimensionalen Form, dass das Innenverkleidungsbauteil gewölbte Abschnitte und/oder ebene Abschnitte aufweist, wobei die ebenen Abschnitte und/oder die gewölbten Abschnitte unterschiedliche Wandstärken aufweisen.

Bei bislang bekannten Kalibrierungen wird der Rohling, der im Ausgangszustand eine flächige ebene Form aufweist, nicht in eine dreidimensionale Form gemäß der obigen Definition vorgeformt, sondern behält seine im Wesentlichen zweidimensionale Form bei. Die Kalibrierung dient insbesondere dazu, die Rohlinge auf eine einheitliche, reproduzierbare und vorgegebene Dicke zu bringen, auf ihre Schmelz- oder Erweichungstemperaturen zu erwärmen und Luft aus dem Rohling zu entfernen.

Die dreidimensionale Form des mit dem Kalibrierwerkzeug kalibrierten Rohlings entspricht noch nicht der endgültigen Form des Innenverkleidungsbauteils, allerdings kommt sie der endgültigen Form relativ nahe. Der Umfang der Umformung, der im Presswerkzeug durchgeführt wird, wird mit der vorschlagsgemäßen Vorrichtung gegenüber aus dem Stand der Technik bekannten Vorrichtungen deutlich reduziert. Hierdurch kann der Rohling deutlich genauer positioniert in das Presswerkzeug eingelegt werden, so dass das Innenverkleidungsbauteil, welches mit der vorschlagsgemäßen Vorrichtung gefertigt ist, mit einer deutlich höheren Präzision und Reproduzierbarkeit gefertigt werden kann. Wie eingangs erwähnt, weist das vorschlagsgemäße Innenverkleidungsbauteil mindestens zwei Abschnitte mit unterschiedlichen Oberflächenbeschaffenheiten auf. Aufgrund der Tatsache, dass der vorgeformte Rohling deutlich genauer als bislang positioniert in das Presswerkzeug eingelegt werden kann, können die verschiedenen Abschnitte entsprechend genauer gefertigt werden. Insbesondere die Übergänge zwischen den Abschnitten sind klar definiert, so dass die Prozesssicherheit mit der vorschlagsgemäßen Vorrichtung deutlich erhöht werden kann als bei einer Vorrichtung, bei welcher der kalibrierte Rohling eine zweidimensionale Form aufweist.

Bei einer weiteren Ausbildung ist vorgesehen, dass das Kalibrierwerkzeug ein Oberwerkzeug mit einer Oberwerkzeugfläche und ein Unterwerkzeug mit einer Unterwerkzeugfläche umfasst, die relativ zueinander bewegbar sind, wobei das Oberwerkzeug und/oder das Unterwerkzeug mindestens zwei Temperaturzonen aufweisen, die mit unterschiedlichen Temperaturen betreibbar sind. Die Oberwerkzeugfläche und die Unterwerkzeugfläche sind diejenigen Flächen des Kalibrierwerkzeugs, die beim Kalibrieren mit dem Rohling in Kontakt treten.

Die Verwendung von unterschiedlichen Temperaturen innerhalb des Kalibrierwerkzeugs ermöglicht es, das fertige Innenverkleidungsbauteil mit den eingangs beschriebenen unterschiedlichen Oberflächenbeschaffenheiten, insbesondere mit den unterschiedlichen Härten, zu versehen.

Eine fortentwickelte Ausbildung gibt vor, dass die Temperaturzonen mittels einer Isolierschicht voneinander getrennt sind. In dieser Ausbildung ist es möglich, die Temperaturzonen thermisch klar voneinander zu trennen, so dass Übergangsbereiche zwischen den Temperaturzonen, wo sich undefinierte Temperaturen einstellen, klein gehalten oder ganz vermieden werden können. Die verschiedenen Abschnitte und deren Oberflächenbeschaffenheiten des vorschlagsgemäßen Innenverkleidungsbauteils sind klar voneinander getrennt. Übergangsbereiche, bei denen sich undefinierte Oberflächenbeschaffenheiten einstellen, können minimiert werden.

Nach Maßgabe einer fortentwickelten Ausbildung bildet die Isolierschicht einen Teil der Oberwerkzeugfläche und/oder der Unterwerkzeugfläche. Die Temperaturzonen lassen sich bis zur Oberwerkzeugfläche oder zur Unterwerkzeugfläche führen, an denen der Rohling mit dem Kalibrierwerkzeug in Kontakt tritt. Folglich wird die klare thermische Trennung der Temperaturzonen auch bis zum Rohling beibehalten. Die verschiedenen Abschnitte und deren Oberflächenbeschaffenheiten des vorschlagsgemäßen Innenverkleidungsbauteils sind besonders klar voneinander getrennt. Übergangsbereiche, bei denen sich undefinierte Oberflächenbeschaffenheiten einstellen, können minimiert oder ganz beseitigt werden.

Bei einer weiteren Ausbildung ist auf der Oberwerkzeugfläche und/oder auf der Unterwerkzeugfläche eine Antihaftbeschichtung aufgebracht. Die Antihaftbeschichtung kann beispielsweise PTFE (Polytetrafluorethylen) oder Silikon umfassen oder hieraus bestehen. Die Antihaftbeschichtung erleichtert insbesondere die Bearbeitung und insbesondere die Entformung des Vliesmaterials, welches Thermoplast-Fasern aufweist. Je nach verwendetem Vliesmaterial kann eine ausreichende Entformung aber auch ohne eine Antihaftbeschichtung erreicht werden.

Eine Ausgestaltung der Erfindung betrifft ein Verfahren zum Herstellen eines Innenverkleidungsbauteils nach einem der zuvor diskutierten Ausführungsformen mittels einer Vorrichtung nach einer der zuvor erörterten Ausbildungen, umfassend folgende Schritte:
- Kalibrieren und Vorformen eines Rohlings mittels eines Kalibrierwerkzeugs derart, dass der kalibrierte und vorgeformte Rohling eine dreidimensionale Form aufweist,
- Entnehmen des kalibrierten und vorgeformten Rohlings aus dem Kalibrierwerkzeug und Überführen des kalibrierten und vorgeformten Rohlings in das Presswerkzeug, und
- Formen eines Innenverkleidungsbauteils nach einem der zuvor diskutierten Ausführungsformen aus dem kalibrierten und vorgeformten Rohling mittels eines Presswerkzeugs.

Die technischen Effekte und Vorteile, die sich mit dem vorschlagsgemäßen Verfahren erreichen lassen, entsprechen denjenigen, die für das vorliegende Innenverkleidungsbauteil erörtert worden sind. Zusammenfassend sei auf Folgendes hingewiesen: Die dreidimensionale Form des nach dem vorschlagsgemäßen Verfahren kalibrierten Rohlings entspricht noch nicht der endgültigen Form des Innenverkleidungsbauteils, allerdings kommt sie der endgültigen Form relativ nahe. Der Umfang der Umformung, der im Presswerkzeug durchgeführt wird, wird nach dem vorschlagsgemäßen Verfahren deutlich reduziert. Hierdurch kann der Rohling deutlich genauer positioniert in das Presswerkzeug eingelegt werden, so dass das Innenverkleidungsbauteil, welches nach dem vorschlagsgemäßen Verfahren gefertigt ist, mit einer deutlich höheren Präzision gefertigt werden kann. Aufgrund der Tatsache, dass der vorgeformte Rohling deutlich genauer positioniert in das Presswerkzeug eingelegt werden kann, können die verschiedenen Abschnitte entsprechend genauer gefertigt werden. Insbesondere die Übergänge zwischen den Abschnitten sind klar definiert, so dass die Prozesssicherheit mit dem vorschlagsgemäßen Verfahren deutlich erhöht werden kann als bei einem Verfahren, bei welcher der kalibrierte Rohling eine zweidimensionale Form aufweist.

In einer weiteren Ausgestaltung kann das Oberwerkzeug und/oder das Unterwerkzeug des Kalibrierwerkzeugs mindestens zwei Temperaturzonen aufweisen und das Verfahren den Schritt des Betreibens der Temperaturzonen mit unterschiedlichen Temperaturen umfassen. Die Verwendung von unterschiedlichen Temperaturen innerhalb des Kalibrierwerkzeugs ermöglicht es auf vergleichsweise einfache Weise, das fertige Innenverkleidungsbauteil mit den eingangs beschriebenen unterschiedlichen Oberflächenbeschaffenheiten zu versehen.

Gemäß einer weiterführenden Ausgestaltung des Verfahrens wird der Schritt des Vorformens des Rohlings mittels des Kalibrierwerkzeugs derart ausgeführt, dass der kalibrierte und vorgeformte Rohling eine dreidimensionale Form aufweist. Die verschiedenen, oben beschriebenen Oberflächenbeschaffenheiten können prinzipiell auch mit einem Rohling bereitgestellt werden, der nach dem Kalibrieren und vor dem Formen des Innenverkleidungsbauteils eine zweidimensionale Form aufweist. Dies kann beispielsweise dadurch geschehen, dass die Kalibrierung mit unterschiedlichen Temperaturen auf derselben Seite des Rohlings durchgeführt wird. In diesem Fall ist es aber sehr schwierig, den kalibrierten, zweidimensionalen Rohling mit der notwendigen Präzision in das Presswerkzeug einzulegen. Wird jedoch der Rohling so kalibriert, dass er in eine dreidimensionale Form vorgeformt wird, so dass der Rohling eine Form aufweist, die in etwa derjenigen des fertigen Innenverkleidungsbauteils entspricht, wird das Einlegen in das Presswerkzeug deutlich erleichtert und die Prozesssicherheit erhöht.

Ferner umfasst das vorschlagsgemäße Verfahren den Schritt des Anspritzens oder Hinterspritzens von Funktionselementen. Funktionselemente können beispielsweise dem vereinfachten Positionieren des Innenverkleidungsbauteils in Bezug auf benachbarte Bauteile dienen.

Eine weitere Umsetzung der Erfindung betrifft eine Türseitenverkleidung eines Kraftfahrzeugs, welches ein Innenverkleidungsbauteil nach einem der zuvor beschriebenen Ausführungsformen umfasst. Die technischen Effekte und Vorteile, die sich mit dem vorschlagsgemäßen Verfahren erreichen lassen, entsprechen denjenigen, die für das vorliegende Innenverkleidungsbauteil erörtert worden sind.

Beispielhafte Ausführungsformen der Erfindung werden im Folgenden unter Bezugnahme auf die beigefügten Zeichnungen näher erläutert. Es zeigen
- Figur 1A:: eine perspektivische Ansicht einer Fahrertür eines Kraftfahrzeugs, welches mit einem erfindungsgemäßen Innenverkleidungsbauteil verkleidet ist,
- Figur 1B:: eine Schnittdarstellung durch das Innenverkleidungsbauteil entlang der in Figur 1A definierten Schnittebene A-A,
- Figur 2A:: ein nicht kalibrierter Rohling,
- Figuren 2B bis 2D:: prinzipielle Darstellungen von auf verschiedene Weise kalibrierten und vorgeformten Rohlingen,
- Figur 3:: eine Schnittdarstellung durch einen kalibrierten und vorgeformten 3D-Rohling
- Figuren 4A bis 4D:: eine prinzipielle Darstellung eines erfindungsgemäßen dreidimensionalen Kalibrierungsprozesses eines Rohlings mit einem Kalibrierwerkzeug nach einem ersten Ausführungsbeispiel,
- Figur 5:: eine prinzipielle Schnittdarstellung durch ein Kalibrierwerkzeug nach einem zweiten Ausführungsbeispiel,
- Figuren 6A bis 6F:: eine prinzipielle Darstellung eines erfindungsgemäßen Herstellungsprozesses mit einem Presswerkzeug unter Verwendung eines nach den Figuren 4A bis 4D kalibrierten Rohlings, und
- Figuren 7A und 7B:: eine prinzipielle und nicht maßstäblich vergrößerte Schnittdarstellung der in den Figuren 3A und 3B gezeigten ersten und dritten Abschnitte.

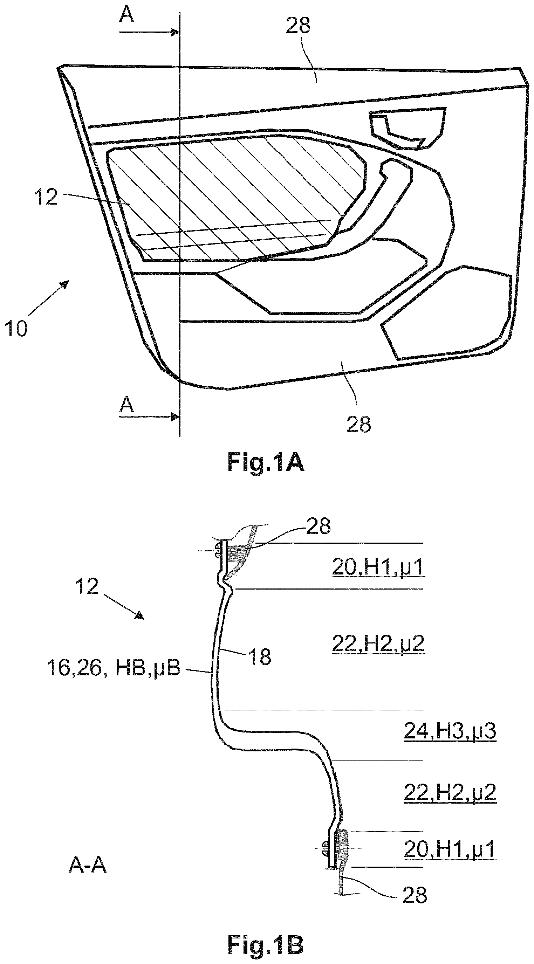

In Figur 1A ist eine Türseitenverkleidung 10 einer Fahrzeugtür eines nicht gesondert dargestellten Kraftfahrzeugs anhand einer prinzipiellen und perspektivischen Ansicht dargestellt, die ein erfindungsgemäßes Innenverkleidungsbauteil 12 aufweist.

In Figur 1B ist das in Figur 1A dargestellte erfindungsgemäße Innenverkleidungsbauteil 12 anhand einer Schnittdarstellung entlang einer Schnittebene A-A dargestellt, die in Figur 1A definiert ist. Das Innenverkleidungsbauteil 12 weist eine erste Oberfläche 16 und eine zweite Oberfläche 18 auf, wobei die zweite Oberfläche 18 im eingebauten Zustand die Sichtseite bildet, die von einem Fahrzeuginsassen wahrgenommen werden kann und in Figur 1A teilweise sichtbar ist. Wie aus Figur 1B hervorgeht, kann die zweite Oberfläche 18 von insgesamt zwei ersten Abschnitten 20, zwei zweiten Abschnitten 22 und einem dritten Abschnitt 24 gebildet sein, so dass sich die zweite Oberfläche 18 beispielsweise in insgesamt fünf Abschnitte 20, 22, 24 unterteilen lässt. Die zweite Oberfläche 18 kann aber auch von nur einem ersten Abschnitt 20 gebildet sein (nicht dargestellt). Die beiden ersten Abschnitte 20 weisen eine erste Abschnittshärte H1, die zwei zweiten Abschnitte 22 eine zweite Abschnittshärte H2 und der dritte Abschnitt 24 eine dritte Abschnittshärte H3 auf, die jeweils verschieden sind. Die erste Abschnittshärte H1 ist beispielsweise vom Betrag her die größte aller Abschnittshärten H1, H2, H3 der zweiten Oberfläche 18, wobei die zweite Abschnittshärte H2 nur unwesentlich geringer ist als die erste Abschnittshärte H1. Die dritte Abschnittshärte H3 ist jedoch deutlich geringer als die erste und die zweite Abschnittshärte H1, H2. Andere Beträge der Abschnittshärten H1, H2 und H3 sind auch denkbar.

Die erste Oberfläche 16 wird von einem einzigen Bereich 26 gebildet, der eine gleichbleibende Bereichshärte HB aufweist. Die Bereichshärte HB ist beispielsweise vom Betrag her gleich der ersten Abschnittshärte H1 oder ähnlich. Wie aus Figur 1B ersichtlich, ist das Innenverkleidungsbauteil 12 in den beiden ersten Abschnitten 20 an jeweils einem benachbarten Bauteil 28 der Türseitenverkleidung 10 befestigt. Das benachbarte Bauteil 28 kann auch Teil der Türseitenverkleidung 10 sein, beispielsweise ein Grundträger oder die Vorderwand einer Kartentasche, während das Innenverkleidungsbauteil 12 ein Türinsert mit einer integrierten Armauflage bildet. Aufgrund der erste Härte H1 des Innenverkleidungsbauteils 12 in den beiden ersten Abschnitten 20 lässt sich eine zuverlässige und präzise Anbindung des Innenverkleidungsbauteils 12 an die benachbarten Bauteile 28 erreichen.

Neben den Abschnittshärten H1, H2, H3 unterscheiden sich die Abschnitte 20, 22, 24 auch in ihrer Oberflächenrauheit. Die ersten Abschnitte 20 weisen eine erste Oberflächenrauheit µ1, die zweiten Abschnitte 22 eine zweite Oberflächenrauheit µ2 und der dritte Abschnitt 24 eine dritte Oberflächenrauheit µ3 auf. Während beispielsweise die zweite Oberfläche 18 in den beiden ersten Abschnitten 20 vergleichsweise glatt ist und folglich eine geringe erste Oberflächenrauheit µ1 aufweist, weisen die zweiten Abschnitte 22 und der dritte Abschnitt 24 eine deutlich höhere zweite bzw. dritte Oberflächenrauheit µ2, µ3 auf. Die zweite und die dritte Oberflächenrauheiten µ2, µ3 sind dabei so ausgestaltet, dass die zweite Oberfläche 18 in den beiden zweiten Abschnitten 22 und im dritten Abschnitt 24 für den Fahrzeuginsassen als flauschig wahrgenommen wird. Der Bereich 26 der ersten Oberfläche 16 weist die Bereichs-Oberflächenrauheit µB auf. Die erste Oberfläche 16 ist deutlich glatter als die zweite Oberfläche 18, so dass die Bereichs-Oberflächenrauheit µB deutlich geringer ist als die geringste Oberflächenrauheit der zweiten Oberfläche 18, also die erste Oberflächenrauheit µ1.

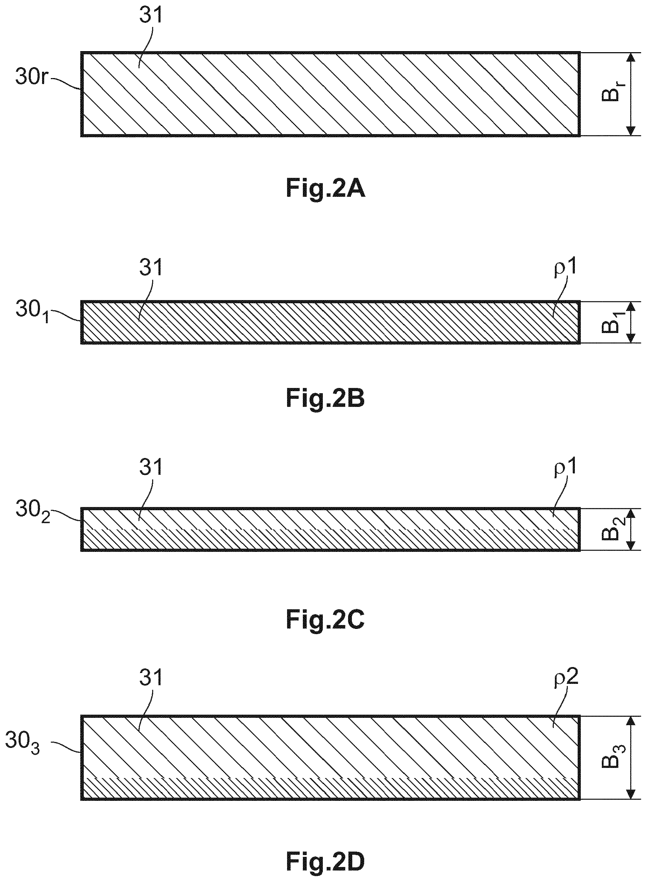

In Figur 2A ist ein nicht kalibrierter Rohling 30r anhand einer prinzipiellen Darstellung gezeigt, aus dem ein vorschlagsgemäßes Innenverkleidungsbauteil 12 hergestellt werden kann. In den Figuren 2B bis 2D sind jeweils verschiedene Ausführungsformen eines kalibrierten Rohlings 30₁ bis 30₃ separat und anhand einer prinzipiellen Darstellung gezeigt. Der Rohling 30 besteht aus einem Vliesmaterial 31, in diesem Fall aus einem vernadelten Vliesmaterial 31, welches Thermoplast-Fasern beispielsweise aus Polyester enthalten kann. Der verwendete Polyester kann beispielsweise Polyethylenterephthalat (PET) oder Polybutylenterephthalat (PBT) sein. Zusätzlich kann das Vliesmaterial 31 auch insbesondere koextrudierte Bikomponentenfasern umfassen, die in einem bestimmten insbesondere gewichtsbezogenen Verhältnis zu den Thermoplast-Fasern stehen können. Das Verhältnis Thermoplast-Fasern zu den Bikomponentenfasern kann beispielsweise zwischen 70:30 und 30:70 betragen. Bei einem Verhältnis von 90:10 lässt sich die gewünschte dauerhafte Verformung nicht mehr erzielen.

Der Rohling 30r, der in Figur 2A dargestellt ist, wird zunächst in einem hier nicht dargestellten Kalibrierwerkzeug kalibriert, wobei der Rohling 30r verdichtet wird. Wie aus den Figuren 2B bis 2D ersichtlich, kann der Rohling 30 unterschiedlich stark verdichtet werden. In Figur 2B ist der dort gezeigte Rohling 30₁ vergleichsweise stark auf eine erste Dichte ρ1 komprimiert worden, wobei die bei der Kalibrierung verwendete Temperatur auf beiden Seiten des Rohlings 30 gleich ist. Die hierbei verwendete Temperatur ist vergleichsweise hoch und beträgt beispielsweise zwischen 140 und 200°C. Infolgedessen weist der Rohling 30₁ sowohl auf der Oberseite als auch auf der Unterseite eine harte und glatte Oberfläche auf.

In Figur 2C ist der dort gezeigte Rohling 30₂ genauso stark komprimiert worden wie der Rohling 30₁, der in Figur 2B gezeigt ist, so dass der in Figur 2C gezeigte Rohling 30₂ auch die erste Dichte ρ1 aufweist. Allerdings ist die verwendete Temperatur auf der Unterseite höher als auf der Oberseite. Während die Unterseite glatt ist, ist die Oberseite hart, aber flauschig.

In Figur 2D ist der dort gezeigte Rohling 30₃ weniger stark komprimiert worden als es bei den in den Figuren 2B und 2C gezeigten Rohlingen der Fall ist. Der in Figur 2D gezeigte Rohling 30₃ weist daher eine zweite Dichte ρ2 auf, die geringer ist als die erste Dichte ρ1. Wie auch beim in Figur 2C gezeigten Rohling 30₂ ist die Temperatur beim Kalibrieren auf der Unterseite höher als auf der Oberseite. Wiederum ist die Unterseite hart und glatt, während die Oberseite weich und flauschig ist.

Die unterschiedlichen Dichten ρ können dadurch erzeugt werden, dass der nicht kalibrierte und nicht vorgeformte Rohling 30r unterschiedliche Wandstärken Bᵣ aufweist.

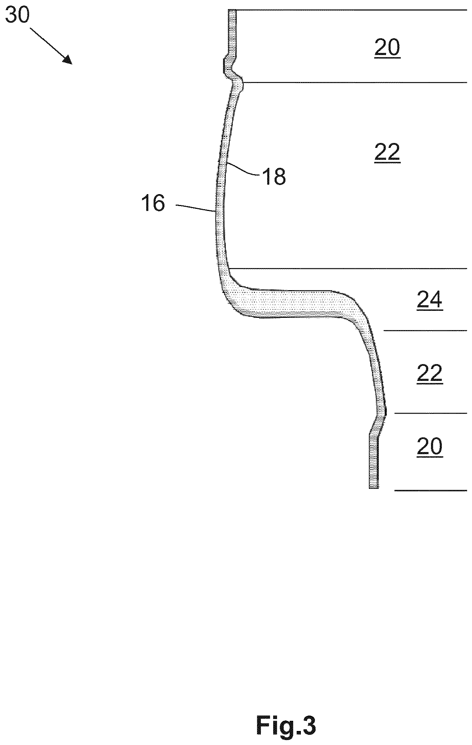

In Figur 3 ist ein kalibrierter 3D-Rohling 30 dargestellt, welcher zwei erste Abschnitte 20, zwei zweite Abschnitte 22 und einen dritten Abschnitt 24 aufweist. Gut erkennbar ist, dass sowohl die erste Oberfläche 16 als auch die zweite Oberfläche 18 gewölbt sind. Es ist aber auch möglich, dass die erste Oberfläche 16 eben ist und die zweite Oberfläche 18 unterschiedliche Höhen aufweist (nicht dargestellt). In diesem Fall wird der Rohling 30 auch als 2,5D-Rohling bezeichnet.

Die beiden ersten Abschnitte 20 weisen dieselben Eigenschaften wie der in Figur 2B gezeigte Rohling 30 auf. Die beiden zweiten Abschnitte 22 weisen dieselben Eigenschaften wie der in der Figur 2C gezeigte Rohling 30₂ auf. Der dritte Abschnitt 24 weist dieselben Eigenschaften wie der in Figur 2D gezeigte Rohling 30₃ auf. Der so kalibrierte Rohling 30 wird in ein Umformwerkzeug eingelegt, welches hier nicht gesondert dargestellt ist.

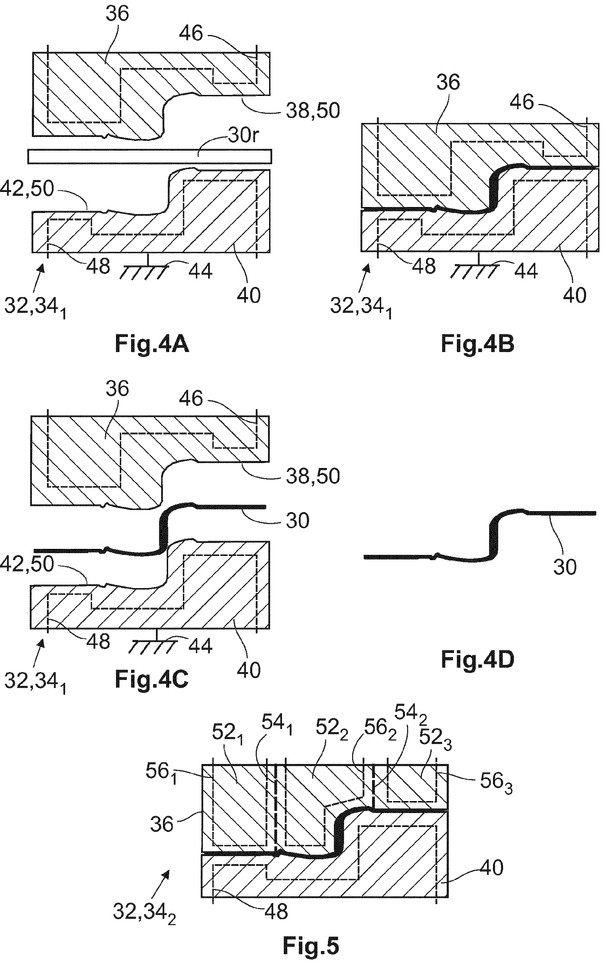

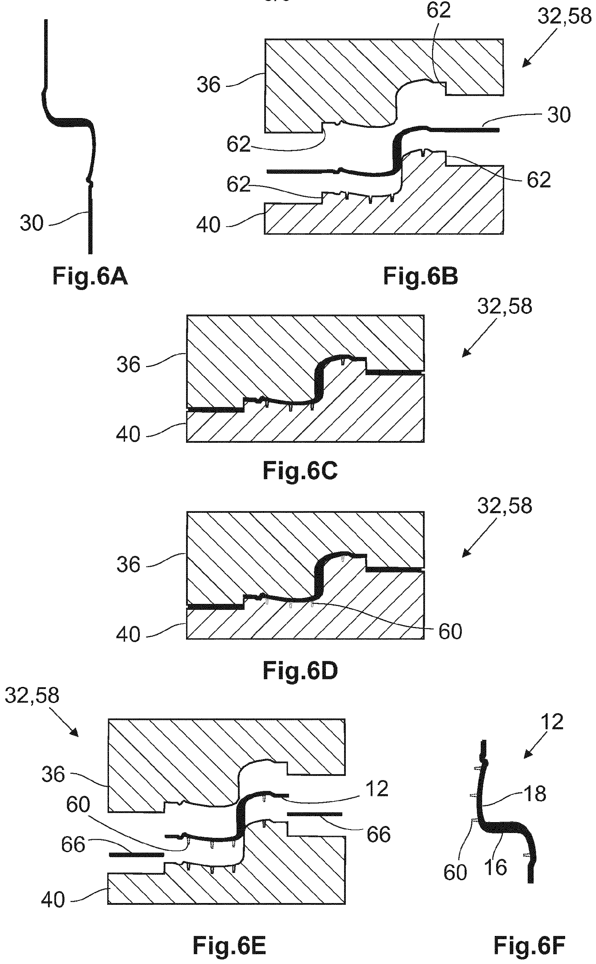

In den Figuren 4A bis 4D und 6A bis 6F sind eine erfindungsgemäße Vorrichtung 32 und ein erfindungsgemäßes Verfahren zum Herstellen eines Innenverkleidungsbauteils 12 wie in den Figuren 1A und 1B gezeigt, dargestellt. Die erfindungsgemäße Vorrichtung 32 umfasst ein Kalibrierwerkzeug 34₁, von dem ein erstes Ausführungsbeispiel in den Figuren 4A bis 4C dargestellt ist. Das Kalibrierwerkzeug 34₁ weist ein Oberwerkzeug 36 mit einer Oberwerkzeugfläche 38 und ein Unterwerkzeug 40 mit einer Unterwerkzeugfläche 42 auf. Das Oberwerkzeug 36 und das Unterwerkzeug 40 können mit einer nicht dargestellten Bewegungsvorrichtung relativ zueinander bewegt werden. Im dargestellten Ausführungsbeispiel des Kalibrierwerkzeugs 34₁ ist das Unterwerkzeug 40 fest auf einem Boden 44, beispielsweise einer Werkhalle, befestigt und nur das Oberwerkzeug 36 relativ zum Unterwerkzeug 40 bewegbar. Das Oberwerkzeug 36 ist mit einer Oberwerkzeug-Heizeinrichtung 46 und das Unterwerkzeug 40 mit einer Unterwerkzeug-Heizeinrichtung 48 versehen, so dass der Rohling 30 beim Kalibrieren auf eine bestimmte Temperatur erwärmt werden kann. Dabei kann die Temperatur an der Oberwerkzeugfläche 38 von der Temperatur an der Unterwerkzeugfläche 42 abweichen. Hierdurch ist es möglich, die erste Oberfläche 16 des Innenverkleidungsbauteils 12 mit einer anderen Oberflächenbeschaffenheit zu versehen als die zweite Oberfläche 18.

In Figur 4A befindet sich das Kalibrierwerkzeug 34₁ in einem geöffneten Zustand, in welchem das Oberwerkzeug 36 und das Unterwerkzeug 40 maximal weit voneinander entfernt angeordnet sind. Im geöffneten Zustand kann ein mattenförmiger Rohling 30r in das Kalibrierwerkzeug 34₁ eingelegt werden. Der Rohling 30r weist eine im Wesentlichen flächige, zweidimensionale Form auf. Anschließend wird das Kalibrierwerkzeug 34₁ geschlossen, wozu das Oberwerkzeug 36 zum Unterwerkzeug 40 hin bewegt wird. Der Rohling 30 wird hierdurch kalibriert und in eine dreidimensionale Form vorgeformt. Danach wird das Kalibrierwerkzeug 34₁ geöffnet, so dass der kalibrierte, vorgeformte Rohling 30 entnommen werden kann. Zum besseren Entformen sind die Oberwerkzeugfläche 38 und die Unterwerkzeugfläche 42 mit einer Antihaftbeschichtung 50 versehen, was aber nicht zwingend erforderlich ist.

In Figur 5 ist ein zweites Ausführungsbeispiel des Kalibrierwerkzeugs 34₂ anhand einer separaten Darstellung im geschlossenen Zustand gezeigt. Der grundsätzliche Aufbau des Kalibrierwerkzeugs 34₂ nach dem zweiten Ausführungsbeispiel entspricht weitgehend dem Aufbau des Kalibrierwerkzeugs 34₁ nach dem ersten Ausführungsbeispiel, wobei jedoch das Oberwerkzeug 36 insgesamt drei Temperaturzonen 52₁ bis 52₃ aufweist. Die drei Temperaturzonen 52₁, 52₂, 52₃ sind mit je einer Isolierschicht 54₁, 54₂ getrennt, welche bis zur Oberwerkzeugfläche 38 reicht. Die drei Temperaturzonen 52₁, 52₂, 52₃ des Oberwerkzeugs 36 weisen jeweils eine eigene Heizeinrichtung 56₁, 56₂, 56₃ auf, so dass die Temperaturzonen 52₁, 52₂, 52₃ auf unterschiedliche Temperaturen erwärmt werden können. Wie erwähnt, kann die Oberflächenbeschaffenheit mit der beim Kalibrieren verwendeten Temperatur beeinflusst werden. Der mit dem zweiten Ausführungsbeispiel des Kalibrierwerkzeugs 34₂ hergestellte und vorgeformte Rohling 30 weist daher eine zweite Oberfläche 18 auf, welche von insgesamt drei Abschnitten 20, 22, 24 mit unterschiedlichen Oberflächenbeschaffenheiten, insbesondere mit unterschiedlichen Härten H1, H2, H3 und unterschiedlichen Oberflächenrauheiten µ1, µ2, µ3 gebildet wird.

In den Figuren 6B bis 6E ist ein zur Vorrichtung 32 gehöriges Ausführungsbeispiel eines Presswerkzeugs 58 anhand von verschiedenen prinzipiellen Darstellungen in verschiedenen Betriebszuständen gezeigt. In Figur 6A ist der bereits in Figur 4D gezeigte und in eine dreidimensionale Form vorgeformte und kalibrierte Rohling 30 dargestellt, welcher, wie in Figur 6B dargestellt, in das geöffnete Presswerkzeug 58 eingelegt wird. Anschließend wird das Presswerkzeug 58 geschlossen (Figur 6C), wozu das Oberwerkzeug 36 in Richtung des Unterwerkzeugs 40 bewegt wird. Im geschlossenen Zustand wird der Rohling 30 in die endgültige Form umgeformt, wodurch das vorschlagsgemäße Innenverkleidungsbauteil 12 entsteht. Die Oberflächenbeschaffenheiten der ersten Oberfläche 16 und der zweiten Oberfläche 18 werden beim Kalibrieren im ersten Presswerkezug 34 vorgegeben und bleiben während der Bearbeitung im Presswerkzeug 58 weitgehend unverändert.

Das Presswerkzeug 58 weist Schnittkanten 62 auf, mit denen der Rohling 30 infolge des Schließens des Presswerkzeugs 58 auf das gewünschte Maß zugeschnitten wird.

Das Innenverkleidungsbauteil 12 kann eine Anzahl von Funktionselementen 60 aufweisen, die beispielsweise der vereinfachten Befestigung und/oder Positionierung des Innenverkleidungsbauteils 12 im Kraftfahrzeug oder gegenüber angrenzenden Bauteilen wie Bauteil 28 dienen. Diese Funktionselemente 60 werden im Presswerkzeug 58 angespritzt, was in der Figur 6D dargestellt ist. Nachdem die Funktionselemente 60 angespritzt worden sind, wird das Presswerkzeug 58 geöffnet (Figur 6E), so dass das fertige Innenverkleidungsbauteil 12 entnommen werden kann, welches in Figur 6F gezeigt ist. Aufgrund des Zuschnitts des Innenverkleidungsbauteils 12 auf das gewünschte Maß entstehen Reststücke 66, welche entsorgt oder recycelt werden. Der Herstellungsprozess des Innenverkleidungsbauteils 12 ist nun abgeschlossen.

Das in Figur 6F dargestellte Innenverkleidungsbauteil 12 ist im Wesentlichen genauso aufgebaut wie das in Figur 3 dargestellte Innenverkleidungsbauteil 12, weist jedoch etwas andere Abmessungen und die erwähnten Funktionselemente 60 auf. Insbesondere weist das in Figur 6F die beiden ersten Abschnitte 22, die beiden zweiten Abschnitte 24 und den dritten Abschnitt 24 mit den entsprechenden Abschnittshärten H1, H2, H3 und den Oberflächenrauheiten µ1, µ2, µ3 auf, die aus Darstellungsgründen in Figur 6F nicht gezeigt sind.

Aus den obigen Ausführungen geht hervor, dass das Kalibrierwerkzeug 34 und das Presswerkzeug 58 einen ähnlichen Aufbau aufweisen. Allerdings können mit dem Kalibrierwerkzeug 34 keine Funktionselemente 60 angespritzt werden. Auch weist das Kalibrierwerkzeug 34 keine Schnittkanten 62 auf. Wie erwähnt, wird der Rohling 30 im Kalibrierwerkzeug 34 vorgeformt, so dass er in etwa die Form des fertigen Innenverkleidungsbauteils 12 aufweist. Die Verläufe der Oberwerkzeugfläche 38 und der Unterwerkzeugfläche 42 können daher im Vergleich zum Presswerkzeug 58 mit einer deutlich geringeren Präzision versehen werden. Die Temperierung des Presswerkzeugs 58 wird bei deutlich geringeren Temperaturen durchgeführt als im Kalibrierwerkzeug 34, wo anstelle einer Temperierung besser von einem Erhitzen gesprochen wird. Je nach Temperaturzonen 52 wird das Kalibrierwerkzeug 34 auf Temperaturen zwischen 50 und 230°C erwärmt oder erhitzt.

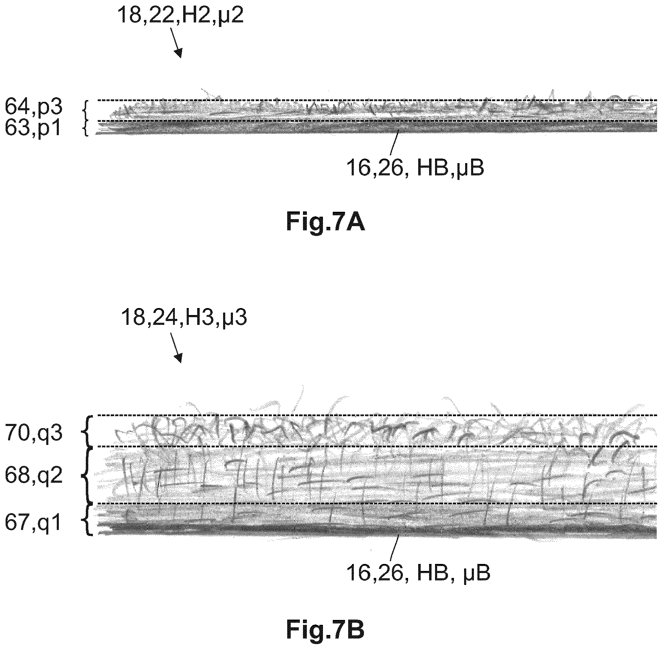

In Figur 7A ist der in Figur 1B gezeigte zweite Abschnitt 22 und in Figur 7B der in Figuren 1B gezeigte dritte Abschnitt 24 anhand einer prinzipiellen Schnittdarstellung in vergrößerter Form dargestellt. Wie bereits erwähnt, weist der in Figur 7A dargestellte zweite Abschnitt 22 die zweite Abschnittshärte H2 und die zweite Oberflächenrauheit µ2 auf, während der in Figur 7B dargestellte dritte Abschnitt 24 die dritte Abschnittshärte H3 und die dritte Oberflächenrauheit µ3 besitzt. Der zweite Abschnitt 22 und der dritte Abschnitt 24 bilden einen Teil der zweiten Oberfläche 18, welche auch die Sichtseite ist. Die erste Oberfläche 16 umfasst ausschließlich den Bereich 26, welcher die gleichbleibende Bereichshärte HB und die gleichbleibende Bereichs-Oberflächenrauheit µB aufweist. Im glatten und harten Bereich 26 stehen kaum lose Vliesfasern aus dem Innenverkleidungsbauteil 12 heraus.

Der in den Figuren 7A und 7B nicht gezeigte erste Abschnitt 20 ist genauso aufgebaut wie die erste Oberfläche 16, so dass die erste Härte H1 gleich der Bereichshärte HB und die erste Oberflächenrauheit µ1 gleich der Bereichs-Oberflächenrauheit µB ist. Dies schließt nicht aus, dass der erste Abschnitt auch anders aufgebaut sein kann. Allerdings bietet sich dieser Aufbau deshalb an, da das Innenverkleidungsbauteil 12 im ersten Abschnitt 20 an einem benachbarten Bauteil 28 befestigt ist (siehe Figur 1B).

Um die im Vergleich zur dritten Abschnittshärte H3 höhere zweite Abschnittshärte H2 und die im Vergleich zur dritte Oberflächenrauheit µ3 geringere zweite Oberflächenrauheit µ2 bereitstellen zu können, unterscheidet sich der Aufbau des zweite Abschnitts 22 im Wesentlichen in folgenden Dingen vom dritten Abschnitt 24: Der zweite Abschnitt 22 weist eine Unterschicht 63 und der dritte Abschnitt 24 eine Unterschicht 67 auf. Die beiden Unterschichten 63 und 67 werden dadurch hergestellt, dass sie beim Formen des Innenverkleidungsbauteils 12 aus dem kalibrierten und vorgeformten Rohling 30 einer hohen Temperatur direkt ausgesetzt werden. Allerdings ist die Unterschichtdicke p1 der Unterschicht 63 des zweite Abschnitts 22 geringer als die Unterschichtdicke q1 der Unterschicht 67 des dritten Abschnitts 24. Die unterschiedlichen Unterschichtdicken p1 und q1 werden infolge einer unterschiedlichen Komprimierung des kalibrierten und vorgeformten Rohlings 30 erreicht. Im zweiten Abschnitt 22 ist die Komprimierung des kalibrierten und vorgeformten Rohlings 30 höher als im dritten Abschnitt 24.

Weiterhin weisen der zweite Abschnitt 22 eine Oberschicht 64 und der dritte Abschnitt 24 eine Oberschicht 70 auf. Die Oberschicht 64 weist dabei eine Oberschichtdicke p3 und die Oberschicht 70 eine Oberschichtdicke q3 auf. Die Oberschichtdicken p3 und q3 können auch als Florhöhe bezeichnet werden. Aufgrund der erwähnten unterschiedlichen Komprimierung des kalibrierten und vorgeformten Rohlings 30 ist die Oberschichtdicke p3 geringer als die Oberschichtdicke q3. Beide Oberschichten 64 und 70 umfassen viele herausstehende lose Vliesfasern, so dass sowohl die Oberschicht 64 als auch die Oberschicht 70 als flauschig wahrgenommen wird. Aufgrund der geringeren Oberschichtdicke p3 im Vergleich zur Oberschichtdicke q3 ist jedoch die erste Härte H1 höher als die dritte Härte H3.

Ebenfalls aufgrund der unterschiedlichen Komprimierung des kalibrierten und vorgeformten Rohlings 30 bildet sich im dritten Abschnitt 24 eine Zwischenschicht 68 mit der Zwischenschichtdicke q2 aus. Folglich ist die Gesamthöhe des Verkleidungsbauteils 12 im zweiten Abschnitt 22, die sich aus der Summe der Unterschichtdicke p1 und der Oberschichtdicke p3 ergibt, geringer als die Gesamthöhe im dritten Abschnitt 24, die sich aus der Summe der Unterschichtdicke q1, der Zwischendickenschicht q2 und der Oberschichtdicke q3 ergibt.

Die Vliesfasern weisen keine besondere Ausrichtung aus, sind also nicht gewebt oder gestrickt und weisen daher keine Maschen oder geschlossene Schlingen auf. Man kann auch von einem Faserflor sprechen. Zum Bereitstellen einer bestimmten Gesamthöhe und einer bestimmten Härten können die Vliesfasern auch geschnitten werden. Auch können wie bei Velours üblich, Gewebe verwendet werden, deren Schlingen anschließend aufgeschnitten werden.

### Bezugszeichenliste

- 10: Türseitenverkleidung
- 12: Innenverkleidungsbauteil
- 16: erste Oberfläche
- 18: zweite Oberfläche
- 20: erster Abschnitt
- 22: zweiter Abschnitt
- 24: dritter Abschnitt
- 26: Bereich
- 28: Bauteil
- 30: Rohling
- 30f: 2,5D-Rohling
- 30g: 3D-Rohling
- 30ᵣ: nicht kalibrierter und nicht vorgeformter Rohling
- 31: Vliesmaterial
- 32: Vorrichtung
- 34: Kalibrierwerkzeug
- 34₁, 34₂: Kalibrierwerkzeug
- 36: Oberwerkzeug
- 38: Oberwerkzeugfläche
- 40: Unterwerkzeug
- 42: Unterwerkzeugfläche
- 44: Boden
- 46: Oberwerkzeug-Heizeinrichtung
- 48: Unterwerkzeug-Heizeinrichtung
- 50: Antihaftbeschichtung
- 52: Temperaturzone
- 52₁ - 52₃: Temperaturzonen
- 54: Isolierschicht
- 54₁ - 54₂: Isolierschicht
- 56₁ - 56₃: Heizeinrichtung
- 58: Presswerkzeug
- 60: Funktionselement

- 62: Schnittkanten
- 63: Unterschicht
- 64: Oberschicht
- 66: Reststücke
- 67: Unterschicht
- 68: Zwischenschicht
- 70: Oberschicht

- Bᵣ: Wandstärke des nicht kalibrierten Rohlings
- B₁ bis B₃: verschiedene Wandstärken des kalibrierten Rohlings
- H1: erste Härte
- H2: zweite Härte
- H3: dritte Härte
- HB: Bereichshärte
- p1: Unterschichtendicke
- p3: Oberschichtdicke
- q1: Unterschichtendicke
- q2: Zwischenschichtdicke
- q3: Oberschichtdicke

- µ1: erste Oberflächenrauheit
- µ2: zweite Oberflächenrauheit
- µ3: dritte Oberflächenrauheit
- µB: Bereichs-Oberflchenrauheit
- ρ1: erste Dichte
- ρ2: zweite Dichte

## Patentansprüche

1. Innenverkleidungsbauteil (12) mit einer dreidimensionalen Form für ein Kraftfahrzeug, wobei das Innenverkleidungsbauteil (12)
- aus einem einzigen Vliesmaterial (31) hergestellt ist und umfasst:
- eine erste Oberfläche (16) und eine zweite Oberfläche (18),
- zumindest einen ersten Abschnitt (20) und zumindest einen zweiten Abschnitt (22), welche jeweils einen Teil der zweiten Oberfläche (18) bilden, wobei
o die erste Oberfläche (16) und die zweite Oberfläche (18) einander gegenüberliegen und die zweite Oberfläche (18) die Sichtseite des Innenverkleidungsbauteils (12) bildet,
o der erste Abschnitt (20) eine erste Abschnittshärte (H1) und der zweite Abschnitt (22) eine zweite Abschnittshärte (H2) aufweisen, und
- die erste Abschnittshärte (H1) und die zweite Abschnittshärte (H2) unterschiedlich sind,
- das Innenverkleidungsbauteil (12) einen einzigen Bereich (26) aufweist, der die erste Oberfläche (16) bildet, und
- die erste Abschnittshärte (H1) größer als die zweite Abschnittshärte (H2) ist,
**dadurch gekennzeichnet, dass**
- der Bereich (26) eine gleichbleibende Bereichshärte (HB) aufweist, die gleich der ersten Abschnittshärte (H1) ist.

2. Innenverkleidungsbauteil (12) nach Anspruch 1,
**dadurch gekennzeichnet, dass** das Innenverkleidungsbauteil (12) im ersten Abschnitt (20) eine erste Dichte (ρ1) und im zweiten Abschnitt (22) eine zweite Dichte (p2) aufweist, wobei die erste Dichte (ρ1) zwischen 0,6 g/cm³ und 1 g/cm³ und die zweite Dichte (p2) zwischen 0,1 g/cm³ und 0,6 g/cm³ betragen.

3. Innenverkleidungsbauteil (12) nach einem der vorherigen Ansprüche,
**dadurch gekennzeichnet, dass**
- der erste Abschnitt (20) eine erste Oberflächenrauheit (u1) und der zweite Abschnitt (22) eine zweite Oberflächenrauheit (µ2) aufweist und
- die erste Oberflächenrauheit (µ1) und die zweite Oberflächenrauheit (µ2) unterschiedlich sind.

4. Innenverkleidungsbauteil (12) nach einem der vorherigen Ansprüche,
**dadurch gekennzeichnet, dass** das Vliesmaterial (31) ein vernadeltes Vliesmaterial (31) ist.

5. Innenverkleidungsbauteil (12) nach Anspruch 4,
**dadurch gekennzeichnet, dass** das vernadelte Vliesmaterial (31) Thermoplast-Fasern mit unterschiedlichen Schmelztemperaturen umfasst.

6. Innenverkleidungsbauteil (12) nach Anspruch 5,
**dadurch gekennzeichnet, dass** die Thermoplast-Fasern aus Polyester, insbesondere aus Polyethylenterephthalat oder Polybutylenterephthalat bestehen.

7. Innenverkleidungsbauteil (12) nach einem der vorherigen Ansprüche, **dadurch gekennzeichnet, dass** das Vliesmaterial (31) Bikomponentenfasern umfasst.

8. Innenverkleidungsbauteil (12) nach den Ansprüchen 6 und 7 oder nach den Ansprüchen 5 und 7,
**dadurch gekennzeichnet, dass** der gewichtsbezogene Anteil von den Thermoplast-Fasern zu den Bikomponentenfasern zwischen 70:30 und 30:70 beträgt.

9. Verfahren zum Herstellen eines Innenverkleidungsbauteils (12) nach einem der Ansprüche 1 bis 8 mittels einer Vorrichtung, wobei die Vorrichtung umfasst:
- ein Kalibrierwerkzeug (34) zum Kalibrieren und Vorformen eines Rohlings (30), so dass der kalibrierte und vorgeformte Rohling (30) eine dreidimensionale Form aufweist, und
- ein Presswerkzeug (58) zum Formen eines Innenverkleidungsbauteils (12) aus dem kalibrierten und vorgeformten Rohling (30), wobei das Verfahren folgende Schritte umfasst:
- Kalibrieren und Vorformen eines Rohlings (30) mittels eines Kalibrierwerkzeugs (34),
- Entnehmen des kalibrierten und vorgeformten Rohlings (30) aus dem Kalibrierwerkzeug (34) und Überführen des kalibrierten und vorgeformten Rohlings (30) in das Presswerkzeug (58), und
- Formen eines Innenverkleidungsbauteils (12) nach einem der Ansprüche 1 bis 8 aus dem kalibrierten und vorgeformten Rohling (30) mittels eines Presswerkzeugs (58).

10. Verfahren nach Anspruch 9, wobei das Oberwerkzeug (36) und/oder das Unterwerkzeug (40) des Kalibrierwerkzeugs (34) mindestens zwei Temperaturzonen (52) aufweist, umfassend den Schritt des Betreibens der Temperaturzonen (52) mit unterschiedlichen Temperaturen.

11. Verfahren nach einem der Ansprüche 9 oder 10, wobei der Schritt des Vorformens des Rohlings (30) mittels eines Kalibrierwerkzeugs (34) derart ausgeführt wird, dass der kalibrierte und vorgeformte Rohling (30) eine dreidimensionale Form aufweist.

12. Verfahren nach einem der Ansprüche 9 bis 11 , umfassend folgenden Schritt:
- Anspritzen oder Hinterspritzen von Funktionselementen (60).

13. Türseitenverkleidung (10) eines Kraftfahrzeugs, umfassend ein Innenverkleidungsbauteil (12) nach einem der Ansprüche 1 bis 8.

## Claims

1. Interior trim component (12) of a three-dimensional shape for a motor vehicle,
wherein the interior trim component (12)
- is manufactured from a single fleece material (31) and comprises:
- a first surface area (16) and a second surface area (18),
- at least one first section (20) and at least one second section (22), each of which forms a part of the second surface area (18), wherein
o the first surface area (16) and the second surface area (18) are arranged opposite one another and the second surface area (18) forms the visible side of the interior trim component (12)
o the first section (20) comprises a first section hardness (H1) and the second section (22) comprises a second section hardness (H2), and
- the first section hardness (H1) and the second section hardness (H2) differ from one another,
- the interior trim component (12) comprises a single region (26), which forms the first surface area (16), and
- the first section hardness (H1) is greater than the second section hardness (H2), **characterized in that**
- the region (26) comprises a constant region hardness (HB), which is equal to the first section hardness (H1).

2. Interior trim component (12) in accordance with claim 1,
**characterized in that** the interior trim component (12) comprises, in the first section (20), a first density (p1), and in the second section (22), a second density (p2), wherein the first density (p1) is between 0.6 g/cm³ and 1 g/cm³ and the second density (p2) is between 0.1 g/cm³ and 0.6 g/cm³.

3. Interior trim component (12) in accordance with either of the preceding claims, **characterized in that**
- the first section (20) comprises a first surface area roughness (µ1) and the second section (22) comprises a second surface area roughness (µ2), and
- the first surface area roughness (µ1) and the second surface area roughness (µ2) differ from one another.

4. Interior trim component (12) in accordance with any of the preceding claims, **characterized in that** the fleece material (31) is a needled fleece material (31).

5. Interior trim component (12) in accordance with claim 4,
**characterized in that** the needled fleece material (31) comprises thermoplastic fibers which have differing melting temperatures.

6. Interior trim component (12) in accordance with claim 5,
**characterized in that** the thermoplastic fibers are comprised of polyester, in particular of polyethylene terephthalate or polybutylene terephthalate.

7. Interior trim component (12) in accordance with any of the preceding claims, **characterized in that** the fleece material (31) comprises bicomponent fibers.

8. Interior trim component (12) in accordance with the claims 6 and 7 or in accordance with the claims 5 and 7,
**characterized in that** the weight content of the thermoplastic fibers in proportion to the bicomponent fibers is between 70:30 and 30:70.

9. Method for manufacturing an interior trim component (12) in accordance with any of claims 1 to 8, by means of an apparatus, wherein the apparatus comprises:
- a calibrating tool (34) for calibrating and preforming a blank (30) such that the calibrated and preformed blank (30) comprises a three-dimensional shape, and
- a pressing tool (58) for forming an interior trim component (12) out of the calibrated and preformed blank (30). wherein the method comprises the following steps:
- calibrating and preforming a blank (30) by means of a calibrating tool (34),
- removing the calibrated and preformed blank (30) from the calibrating tool (34) and transferring the calibrated and preformed blank (30) into the pressing tool (58), and
- forming an interior trim component (12) in accordance with any of the claims 1 to 8 from the calibrated and preformed blank (30) by means of the pressing tool (58).

10. Method in accordance with claim 9, wherein the upper tool (36) and/or the lower tool (40) of the calibrating tool (34) comprise(s) at least two temperature zones (52), comprising the step of operating the temperature zones (52) with different temperatures.

11. Method in accordance with either of claims 9 or 10, wherein the step of preforming the blank (30) by means of a calibrating tool (34) is carried out such that the calibrated and preformed blank (30) comprises a three-dimensional shape.

12. Method in accordance with any of claims 9 to 11, comprising the following step:
- over molding or back molding of functional elements (60).

13. Door side panel (10) of a motor vehicle, comprising an interior trim component (12) in accordance with any of claims 1 to 8.

## Revendications

1. Matériau de revêtement intérieur (12) de forme tridimensionnelle, pour un véhicule automobile, ce matériau de revêtement intérieur (12) étant :
- réalisé en un unique matériau non tissé (31) et comprenant :
• une première face (16) et une seconde face (18),
• au moins un premier segment (20) et au moins un second segment (22) qui constituent respectivement une partie de la deuxième face (18),
• la première face (16) et la seconde face (18) étant opposées l'une à l'autre et la seconde face (18) constitue le côté visible du composant de revêtement intérieur (12),
• le premier segment (20) ayant une première dureté de segment (H1) et le second segment (22) ayant une seconde dureté de segment (H2), et
- la première sureté de segment (H1) et la seconde dureté de segment (H2) étant différentes,
- le composant de revêtement intérieur (12) ayant un unique secteur (26) qui forme la première face (16), et
- la première dureté de segment (H 1) étant supérieure à la seconde dureté de segment (H2),
composant **caractérisé en ce que**
- le secteur (26) a une dureté de secteur (HB), constante qui est égale à la première dureté de segment (H1).

2. Composant de revêtement intérieur (12) selon la revendication 1, **caractérisé en ce que**
le composant de revêtement intérieur (12) ayant un premier segment (20) ayant une première densité (ρ1) et au moins un second segment (22) ayant une seconde densité (ρ2), la première densité (ρ1) étant comprise entre 0,6 g/cm³ et 1 g/cm³ et la seconde densité (p2) étant comprise entre 0,1 g/cm³ et 0,6 g/cm³.

3. Composant de revêtement intérieur (12) selon l'une des revendications précédentes,
**caractérisé en ce que**
le premier segment (20) a une première rugosité de surface et le second segment (22) a une seconde rugosité de surface (p2), et
- la première rugosité de surface et la seconde rugosité de surface (p2) sont différentes.

4. Composant de revêtement intérieur (12) selon l'une des revendications précédentes,
**caractérisé en ce que**
le matériau non-tissé (31) est un matériau non-tissé (31) aiguilleté.

5. Composant de revêtement intérieur (12) selon la revendication 4, **caractérisé en ce que**
le matériau non tissé aiguilleté (31) comprend des fibres thermoplastiques ayant des températures de fusion différentes.

6. Composant de revêtement intérieur (12) selon la revendication 5, **caractérisé en ce que**
les fibres thermoplastiques sont en polyester, notamment en polyéthylène téréphtalate ou en polybutylène téréphtalate.

7. Composant de revêtement intérieur (12) selon l'une des revendications précédentes,
**caractérisé en ce que**
le matériau non tissé (31) a des fibres à bicomposants.

8. Composant de revêtement intérieur (12) selon les revendications 6 et 7 ou les revendications 5 et 7,
**caractérisé en ce que**
la teneur pondérale de fibres thermoplastiques par rapport aux fibres à bicomposants est comprise entre 70:30 et 30:70.

9. Procédé de fabrication d'un composant de revêtement intérieur (12) selon l'une des revendications 1 à 8, à l'aide d'un dispositif,
le dispositif comprenant :
- un outil de calibrage (34) pour calibrer et préformer une ébauche (30) de façon que l'ébauche calibrée et préformée (30) a une forme tridimensionnelle, et
- un outil de presse (58) pour mettre en forme un composant de revêtement intérieur (12) à partir d'une ébauche (30) calibrée et préformée,
le procédé comprenant les étapes suivantes consistant à :
- calibrer et préformer une ébauche (30) avec un outil de calibrage (34),
- prélever l'ébauche calibrée préformée (30) de l'outil de calibrage (34) et transférer l'ébauche calibrée et préformée (30) dans l'outil de presse (58), et
- former le composant de revêtement intérieur (12) selon l'une des revendications 1 à 8 à partir de l'ébauche (30) calibrée et préformée à l'aide d'un outil de presse (58).

10. Procédé selon la revendication 9,
selon lequel
l'outil supérieur (36) et/ou l'outil inférieur (40) de l'outil de calibrage (34) ont au moins deux zones de température (52), comprenant l'étape consistant à gérer les zones de température (52) à des températures différentes.

11. Procédé selon l'une des revendications 9 ou 10,
selon lequel
l'étape de préformage de l'ébauche (30) avec un outil de calibrage (34) est réalisé de façon que l'ébauche calibrée et préformée (30) présente une forme tridimensionnelle.

12. Procédé selon l'une des revendications 9 à 11,
comprenant l'étape suivante consistant à :
- injecter des éléments fonctionnels (60) sur le devant ou sur le dos.

13. Revêtement de côté de portière (10) d'un véhicule automobile comprenant un composant de revêtement intérieur (12) selon l'une des revendications 1 à 8.
